# EUROPEAN PATENT SPECIFICATION

(11) **EP 3 958 202 B1**
(45) Date of publication and mention of the grant of the patent: **31.07.2024**
(21) Application number: 21182809.0
(22) Date of filing: 12.03.2014
(51) Int. Cl.: G06Q 10/30, G06Q 30/02, G06Q 30/0207, G06Q 30/06, G06Q 30/08, G07F 7/06

(54) **METHOD AND SYSTEM FOR RECYCLING ELECTRONIC DEVICES IN COMPLIANCE WITH SECOND HAND DEALER LAWS**
VERFAHREN UND SYSTEM ZUR RÜCKGEWINNUNG VON ELEKTRONISCHEN VORRICHTUNGEN IN ÜBEREINSTIMMUNG MIT ZWEITHÄNDLER-RICHTLINIEN
PROCÉDÉ ET SYSTÈME DE RECYCLAGE DE DISPOSITIFS ÉLECTRONIQUES EN CONFORMITÉ À DES RÈGLES DE REVENDEURS DE SECONDE MAIN

(30) Priority: 12.03.2013 US 201313794816
(43) Date of publication of application: 23.02.2022
(62) Divisional of application: 14779835.9
(73) Proprietor: ecoATM, LLC, San Diego, CA 92121 (US)
(72) Inventor: BOWLES, Mark, Vincent, San Diego, 92121 (US)
(74) Representative: Forresters IP LLP

(56) References cited:
- WO-A1-2012/138679
- US-A1- 2010 228 676
- US-A1- 2013 046 611
- US-A1- 2013 046 699

## Description

### CROSS-REFERENCE TO RELATED APPLICATION(S)

The present application is a continuation-in-part application of U.S. patent application Ser. No. 13/693,032, filed on Dec. 3, 2012, which is a continuation-in-part application of U.S. patent application Ser. No. 13/438,924, filed on Apr. 4, 2012, which claims priority to U.S. Provisional Patent Application 61/472,611 filed on Apr. 6, 2011, now abandoned, and which is also a continuation-in-part application of U.S. patent application Ser. No. 12/785,465 filed on May 23, 2010, now U.S. Pat. No. 8,200,533, issued on Jun. 12, 2012, which is a continuation-in-part application of U.S. patent application Ser. No. 12/727,624, filed on Mar. 19, 2010, now U.S. Pat. No. 7,881,965, which issued on Feb. 1, 2011, which is a continuation-in-part application of U.S. patent application Ser. No. 12/573,089, filed on Oct. 2, 2009, now U.S. Pat. No. 819,551, issued on Jun. 5, 2012, which claims priority to U.S. Provisional Patent Application 61/102,304 filed on Oct. 2, 2008, now abandoned, and 61/183,510 filed on Jun. 2, 2009, now abandoned.

### TECHNICAL FIELD

The present invention generally relates to reselling electronic devices in compliance with second hand dealer laws.

### BACKGROUND

There has been a large increase in the number of electronic devices used by the typical consumer. These devices include cell phones, PDA's, MP3 players, GPS devices, cameras, beepers, remote controls, cordless phones, calculators, etc. The rapid pace at which new technology and models of electronic devices are introduced creates a situation where many consumers upgrade or replace one or more recyclable device on a frequent basis. Often, the consumer does not dispose of the prior electronic device, but rather just stops using it and begins using the new device. This may happen over several generations of such devices.

In addition to the electronic devices mentioned above, there are many other types of devices that have relatively high frequency replacement rates, including portable mobile electronic devices, such as cell phones, MP3 players, etc, and non-portable electronic devices, such as computers, printers, and the like. In addition to electronic devices, there are content based digital media such as games on CD, DVD, or cartridge, or entertainment mass storage items such as CDs, DVDs, BluRay, etc. There is a need for handling of such items in an ecologically friendly manner, both via recycling or by proper disposal procedures. It has not been convenient for owners of electronic devices to either recycle such devices or to properly dispose of such devices. There is currently little incentive for a device owner to "do the right thing" with a used device. When the owner just stops using a device and simply puts it in storage: the opportunity for recycling or re-use by another party is lost. If the owner just throws the device away in normal trash containers, the proper recycling or safe disposing of the device is thwarted. Efforts have been made to recycle these electronic devices.

One particular problem associated with recycling is complying with second hand dealer laws. Many States began the regulation of secondhand dealers and pawnshops in mid-1900's to help prevent trafficking in stolen goods. The general idea was that by requiring secondhand dealers to capture information about each item they bought and each seller that sold them, this would deter the fencing of stolen items and allow law enforcement to identify reported stolen items and track them back to the seller. Over the years, many of these laws expanded to mandate the filing of the reports with local government, but many local governments chose not to enforce the law because it was not very successful as a means of tracing stolen property and it generated an overwhelming paperwork burden for all sides. Because pawnbrokers conduct their business in such a completely different way than most other secondhand dealers, to a great extent, pawnbrokers are more closely regulated than secondhand dealers. Many secondhand dealer laws (AKA pawn shop license, used good dealer permit, and the like) are aimed to target jewelry, gold, and other precious metals but some also include serialized electronics (which includes mobile phones and other electronics). Unfortunately, a traditional analysis of laws originally written decades ago no longer accurately reflects how business is done in this new millennium so much of the interpretation and enforcement is left to local law enforcement and licensing officials. When these laws exist and are enforced, they generally require transactions to be reported to local law enforcement, and sometimes require a hold period of between 7 and 30 days before items can be resold, and fingerprint and ID capture of each seller.

The prior art has failed to provide an effective mechanism for recycling electronic devices and complying second hand dealer laws.

Prior art documents US2010/228676, US2013/046611, WO2012/1387679, and US2013/046699 disclose recycling of electronic devices at a kiosk.

### SUMMARY

The present invention enables one to securely recycle, donate, trade-in, and/or sell electronic devices in a publicly accessible location with compliance with second hand dealer laws.

One aspect of the present invention is a system for reselling electronic devices in compliance with second hand dealer laws. The system includes an apparatus, a network, and a server with a database. The apparatus comprises a fingerprint reader, an identification reader, an exterior imaging component, a processor, an inspection area, an imaging component within the inspection area, and an electrical connector within the inspection area. The electrical connector is capable of connection to an electronic device positioned within the inspection area. The server connected to the apparatus over the network. A processor of the apparatus is configured to validate an identification of a reseller, process a fingerprint of the reseller to the database, photograph an image of the reseller to the database, and acquire an identification of the electronic device. The processor is configured to collect as transfer data the reseller image, the reseller identification, the fingerprint of the reseller, and the identification of the electronic device. The processor is configured to transmit the transfer data to the server over the network. The server is configured to analyze the transfer data in view of a second hand dealer law for a jurisdiction of a location of the apparatus, determine a procedure for compliance of the second hand dealer law, and comply with the second hand dealer law.

Another aspect of the present invention is a method for reselling electronic devices in compliance with second hand dealer laws. The method includes submitting an electronic device for reselling at an apparatus. The method also includes validating an identification of a reseller of the electronic device. The method also includes acquiring a fingerprint of the reseller. The method also includes acquiring an image of the reseller. The method also includes acquiring an identification of an electronic device. The method also includes collecting as transfer data the recycler image, the reseller identification, the fingerprint of the reseller, and the identification of the electronic device. The method also includes transmitting the transfer data to a server over a network. The method also includes analyzing the transfer data in view of a second hand dealer law for a jurisdiction of a location of the apparatus. The method also includes determining a procedure for compliance of the second hand dealer law. The method also includes complying with the second hand dealer law.

To complete a transaction each reseller must provide a valid ID and must be at least 18 years of age. The kiosk uses state of the art ID scanner and validation software that not only photographs the ID but validates for authenticity by examining the ID for holograms, watermarks, or other specific authentication methods used in all 50 States. Resellers cannot proceed or be paid unless a valid ID is presented to the kiosk. Images of these IDs are collected, stored, and are available as part of the reporting process if required. The kiosk in combination with the server utilizes software for verifying ID's through facial recognition algorithms, the photo on the ID to the photos of the person seen through the cameras at the kiosk. Many law-enforcement agencies rely on similar biometric software for validating ID's to specific people.

The system is a real-time communication technology that enables personnel to approve or reject each transaction at each kiosk from a remote call center by viewing an image of the seller and their ID so that the face and information is verified by a human and not just software. This process takes only a few seconds per transaction through the live attendant software. When operated by a trained operator it is estimated that a single operator can handle the live transaction volume of between 150 and 300 kiosks at a time.

To complete a transaction each consumer must provide a valid thumbprint. The kiosk uses the newest technology in thumbprint reading technology to ensure a valid thumbprint is captured on every transaction. This technology is widely used by government agencies around the world to collect and verify thumbprints. The software actually validates the captured thumbprint to make sure it is legible and acceptable by industry standards. Consumers cannot proceed or be paid until a valid thumbprint is captured. Images of these Thumbprints are collected, stored, and are available as part of the reporting process if required.

The kiosk electronically extracts a serial number (IMEI, MEID, etc.) from each device (if technically possible) and provides this as part of the reporting process if required.

The kiosk collects and stores multiple high resolution images of each seller of each device at the kiosk and can provide these as part of the reporting process.

Although not required by law, the server collects and stores multiple high resolution images of each device collected and can provide these as part of the reporting process.

An additional aspect of the present invention is a kiosk for recycling electronic devices such as mobile phones, tablet computes. e-readers, MP3 players, and the like in compliance with second hand dealer laws. The kiosk preferably has a housing with a touch screen display for user interaction. The kiosk also has an inspection area defined by an upper chamber, a lower chamber and a transparent plate for transporting an electronic device into the inspection area. The upper and lower chambers preferably have mirrors on interior surfaces along with imaging components such as cameras in order to obtain multi-angled views, or even a 3-D profile, of an electronic device within the inspection area. The kiosk also preferably has a carousel with multiple different electrical connectors in order to electrically connect to an electronic device. The kiosk also preferably has a mechanism for automatically binning the electronic device. The kiosk also has a processor configured to perform visual analysis for identification of the electrical device and to determine a condition of the electronic device, especially a LCD display of the electronic device. The processor is configured to perform an electrical analysis of the electronic device. Further, the processor is configured to erase or transfer data from electronic device.

The kiosk of the method comprises a housing, the housing comprising a user interface on an exterior surface of the housing for the user to input information, an upper dome and a lower dome, wherein the upper dome and the lower dome comprise a plurality of mirrors. The kiosk further comprises an upper chamber camera, a lower chamber camera and a transparent surface. The kiosk further comprises a processor within the housing and in communication with the at least one camera, the processor configured to identify the brand and model number of the mobile communication device based on at least one of the information from the user and the images from the at least one camera, the processor configured to determine a purchase price for the used model of the mobile communication device.

Having briefly described the present invention, the above and further objects, features and advantages thereof will be recognized by those skilled in the pertinent art from the following detailed description of the invention when taken in conjunction with the accompanying drawings.

### BRIEF DESCRIPTION OF THE DRAWINGS

FIG. 1 is a block diagram of a system for reselling electronic devices in compliance with second dealer laws.
FIG. 2 is an isolated view of a mobile phone connected to an electrical connector for an erasure of data from the mobile phone.
FIG. 3 is an isolated view of data stored on the mobile phone of FIG. 2.
FIG. 4 is an isolated view of a transfer of data from a recycled electronic device to a new electronic device within an inspection area of a recycling kiosk.
FIG. 5 is a view of a transfer of data from a recycled electronic device to a new electronic device within an inspection area of a recycling kiosk.
FIG. 6 is an isolated view of an imaging component within an inspection area of a recycling kiosk allowing for viewing of a mobile phone for analysis by a remote operator.
FIG. 7 is a perspective view of an operator viewing a display screen showing the image of a mobile phone within an inspection area of a recycling kiosk.
FIG. 8 is a perspective view of a recycling kiosk.
FIG. 8A is a front view of the recycling kiosk of FIG. 8.
FIG. 8B is an isolated view of a front of the recycling kiosk of FIG. 8.
FIG. 8C is an isolated view of a front of the recycling kiosk of FIG. 8.
FIG. 9 is an isolated view of an electrical connector wheel.
FIG. 9A is an isolated view of an electrical connector is a staging area.
FIG. 9B is an isolated view of an electrical connector in a detached position.
FIG. 9C is an isolated view of an electrical connector being detached.
FIG. 9D is an isolated view of an electrical connector being retracted.
FIG. 10 is a perspective view of internal components of a kiosk.
FIG. 10A is a perspective view of internal components of a kiosk.
FIG. 10B is a perspective view of internal components of a kiosk.
FIG. 10C is a perspective view of internal components of a kiosk.
FIG. 11 is an isolated view of a phone an inspection plate of a kiosk.

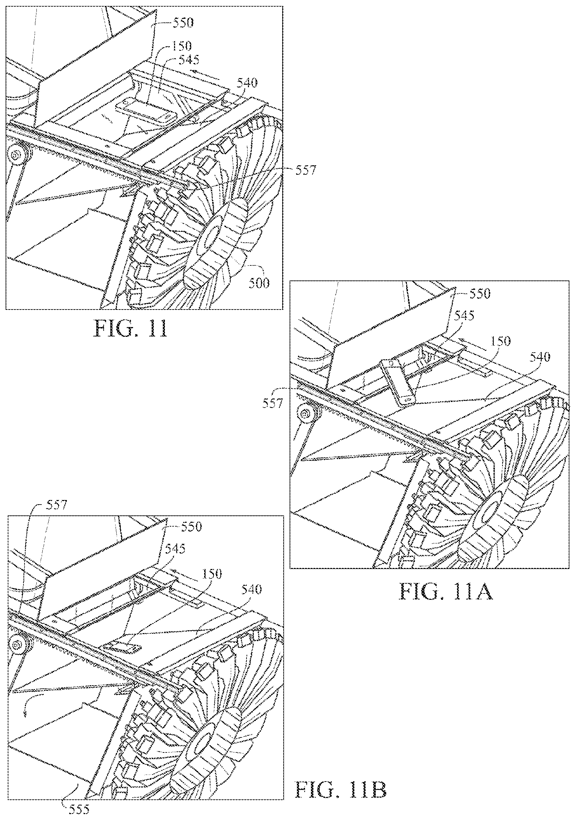

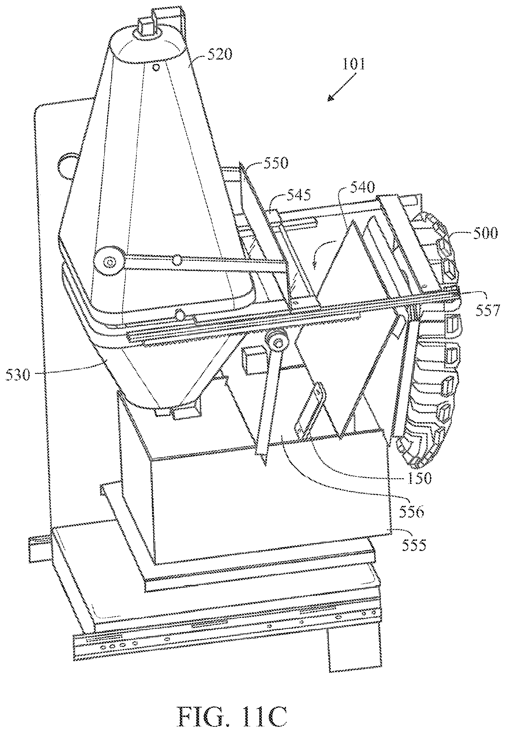

FIG. 11 is an isolated view of a phone being transferred in the kiosk.
FIG. 11B is an isolated view of a phone being transferred in the kiosk.
FIG. 11C is an isolated view of a phone being binned in the kiosk.

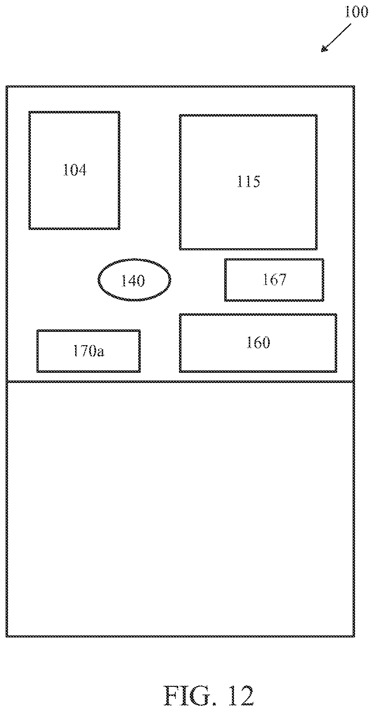

FIG. 12 is a block diagram of components of a recycling kiosk.

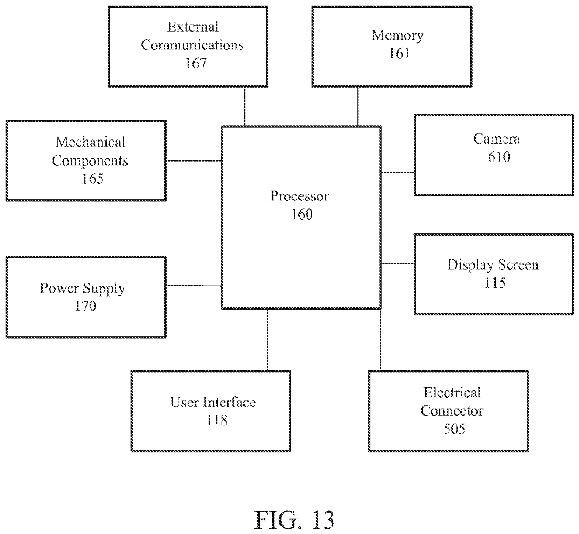

FIG. 13 is a block diagram of components of a recycling kiosk.

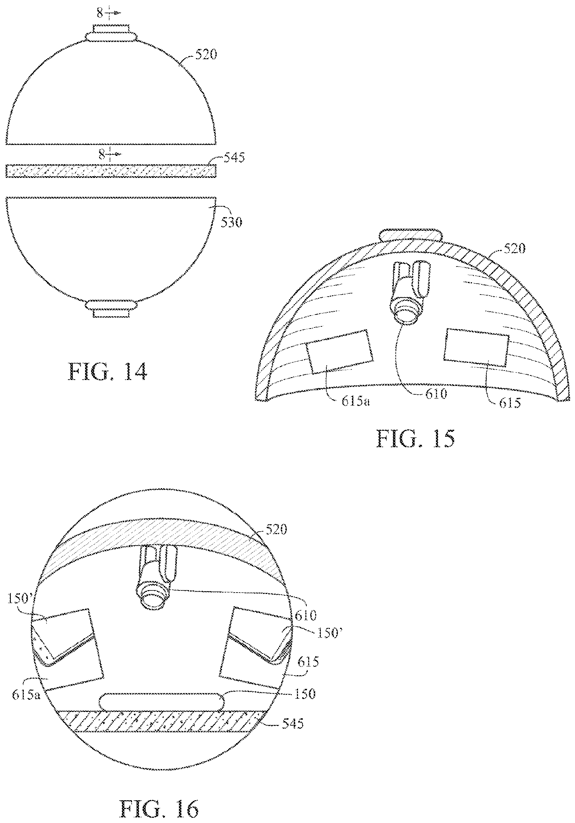

FIG. 14 is an isolated view of an inspection area of a kiosk.
FIG. 15 is an isolated view of a camera in a dome of a kiosk.
FIG. 16 is an isolated view of a phone in an inspection area of a kiosk.

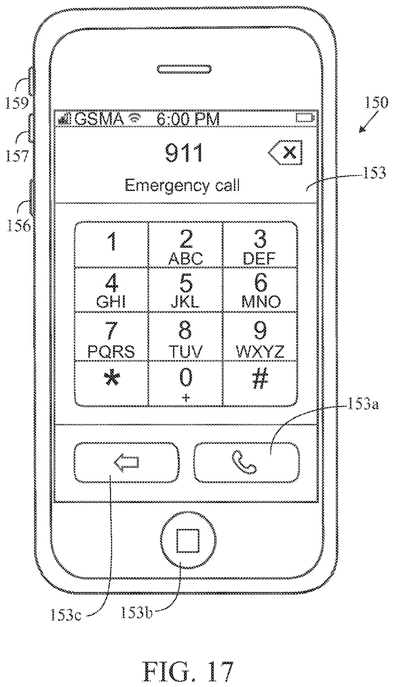

FIG. 17 is a front view of a phone.

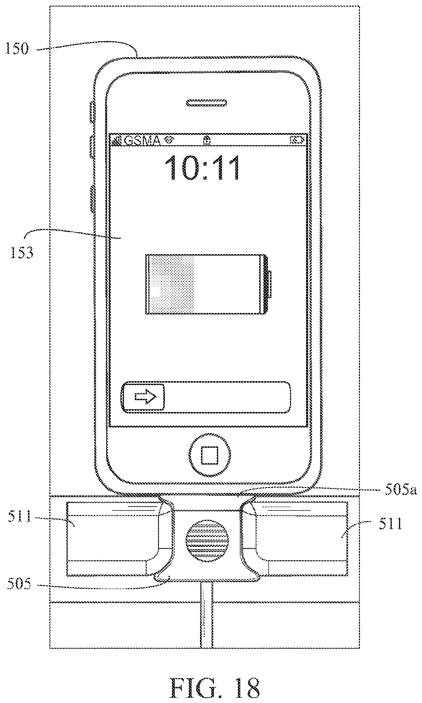

FIG. 18 is a front view of a phone connected to an electrical connector.

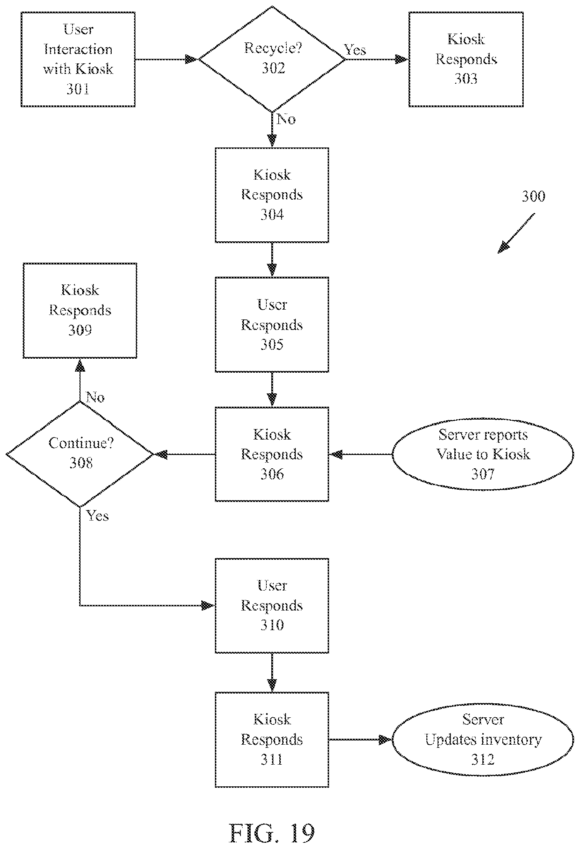

FIG. 19 is a flow chart for recycling an electronic device.

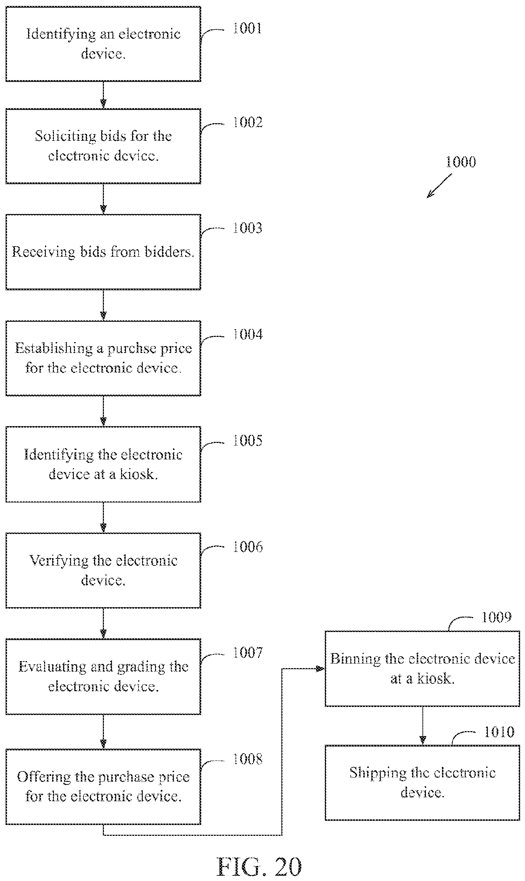

FIG. 20 is a flow chart for a pre-acquisition auction method.

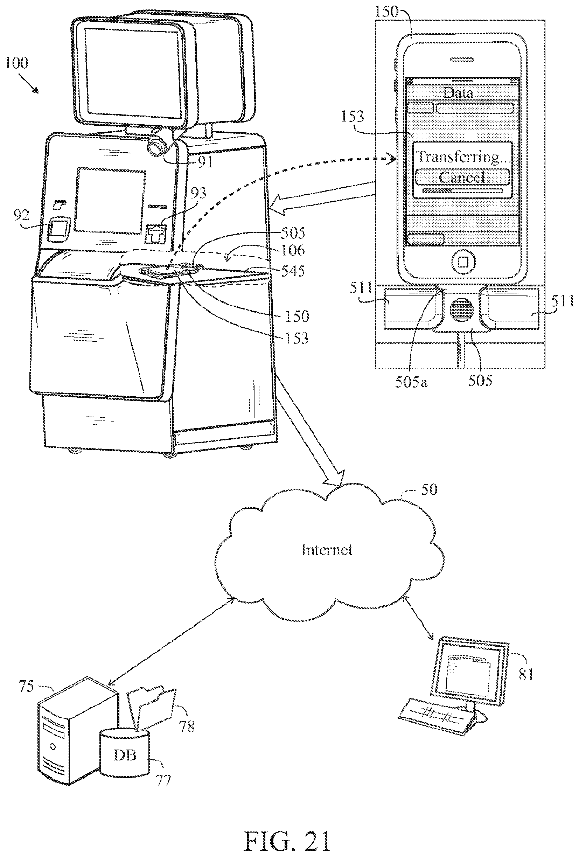

FIG. 21 is a block diagram of a system for reselling electronic devices in compliance with second dealer laws.

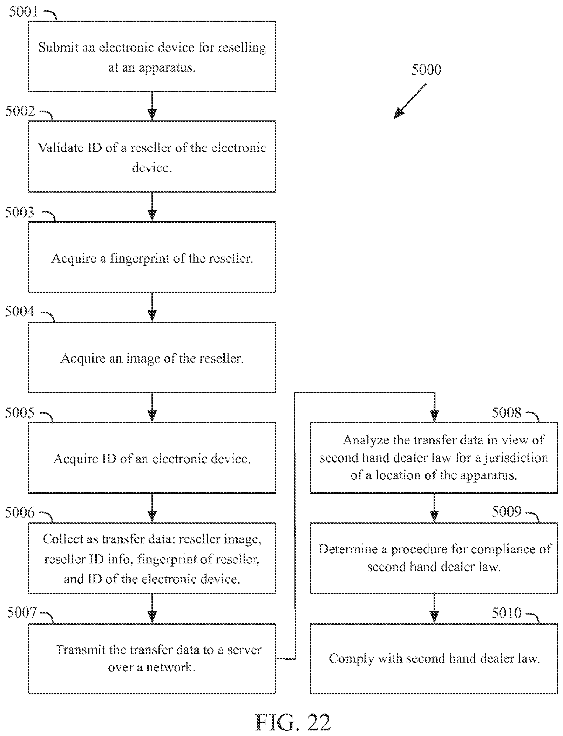

FIG. 22 is a method for reselling electronic devices in compliance with second hand dealer laws.

### DETAILED DESCRIPTION

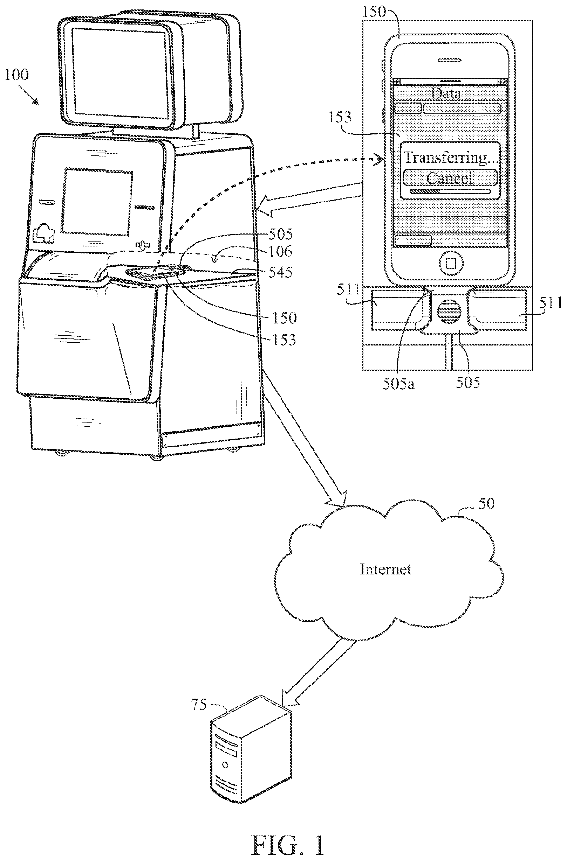

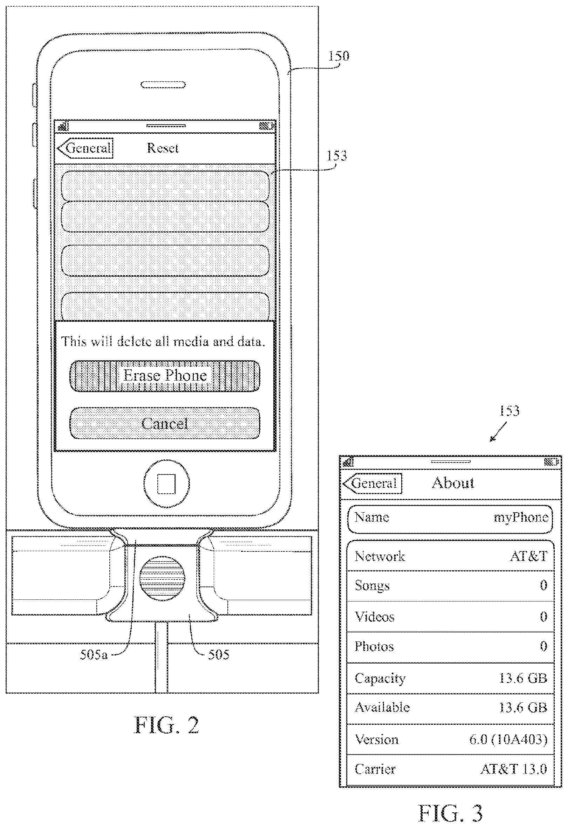

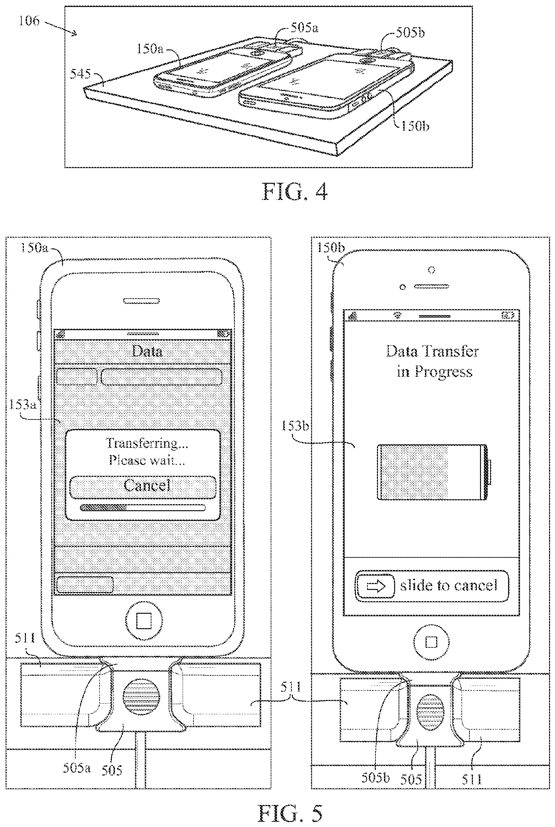

FIG. 1 is a block diagram of a system for reselling electronic devices in compliance with second dealer laws. A kiosk for recycling electronic devices and providing financial remuneration is generally designated 100. The electronic device 150 may be a Smart Phone, mobile phone, tablet computer, IPOD^{®} device, MP3 Player, GPS device, e-reader, etc. Within an inspection area, the electronic device 150 is placed on a transparent plate 545 and connected to an electrical connector 505. Data from the electronic device 150 is either erased or transferred from the electronic device 150. If erased, as shown in FIG. 2, a processor of the kiosk 100 is configured to instruct the electronic device 150 to erase all personal data, such as shown in FIG. 3. Other data, such as operating software for the electronic device, is not erased. If the data is to be transferred, one embodiment includes a processor of the kiosk 100 configured to transfer the data from the electronic device 150, through the kiosk 100 over a network 50 to a server 75 for storage in a database for eventual retrieval by an end-user of the electronic device. In another embodiment, as shown in FIGS. 4 and 5, data is transferred from a recycled electronic device 150a to a new electronic device 150b. Both devices 150a and 150b are preferably placed on a transparent plate 545 within the inspection area 106 and connected to electrical connectors 505a and 505b respectively. The transfer is shown on the display screens 153a and 153b of the electronic devices 150a and 150b.

In a preferred embodiment, FIG. 21 is a block diagram of a system for reselling electronic devices in compliance with second dealer laws. A kiosk for reselling electronic devices and providing financial remuneration is generally designated 100. The electronic device 150 may be a Smart Phone, mobile phone, tablet computer, IPOD^{®} device, MP3 Player, GPS device, e-reader, etc. The kiosk 100 preferably includes an external camera 91, a fingerprint reader 92 and an identification (card) reader 93. Within an inspection area 106, the electronic device 150 is placed on a transparent plate 545 and connected to an electrical connector 505. A processor of the apparatus is configured to validate an identification of a reseller, process a fingerprint of the reseller to the database, photograph an image of the reseller to the database, and acquire an identification of the electronic device. The processor is configured to collect as transfer data the reseller image, the reseller identification, the fingerprint of the reseller, and the identification of the electronic device. The processor is configured to transmit the transfer data to the server over the network.

Data from the electronic device **150** is removed from the electronic device **150** and transferred from the electronic device **150,** through the kiosk **100** over a network **50** to a server **75** for storage in a database **77** as an electronic transfer data file for retrieval if necessary by governmental regulatory agencies. The is configured to analyze the transfer data in view of a second hand dealer law for a jurisdiction of a location of the apparatus, determine a procedure for compliance of the second hand dealer law, and comply with the second hand dealer law.

The server **75** is also configured to transmit a communication to a client device **81** at a governmental regulatory agency over the network **50** if necessary. In one further embodiment, the identification of the electronic device is compared against a stolen electronic database as a filter prior to purchasing the electronic device from the reseller, using an IMEI, MEID, or serial number of the electronic device. In yet an additional further embodiment, the kiosk **100** is located in the retail store with the client device **81.** In yet an additional further embodiment, the client device **77** is at a home or office of an end user and the new electronic device **150***a* is uploaded with the transfer data **78** by the end user.

In one embodiment, the serve **75** transmits a communication to the end user in the form of an email with the data attached in an electronic file, or a link to the data at the database.

In another embodiment, the server **75** uses facial recognition software to identify a reseller based on an image acquired from the external camera **91** of the kiosk **100** and an image of the reseller's identification from the identification reader **93.** The server **75** compares the two images, and may also compare the images to facial image databases.

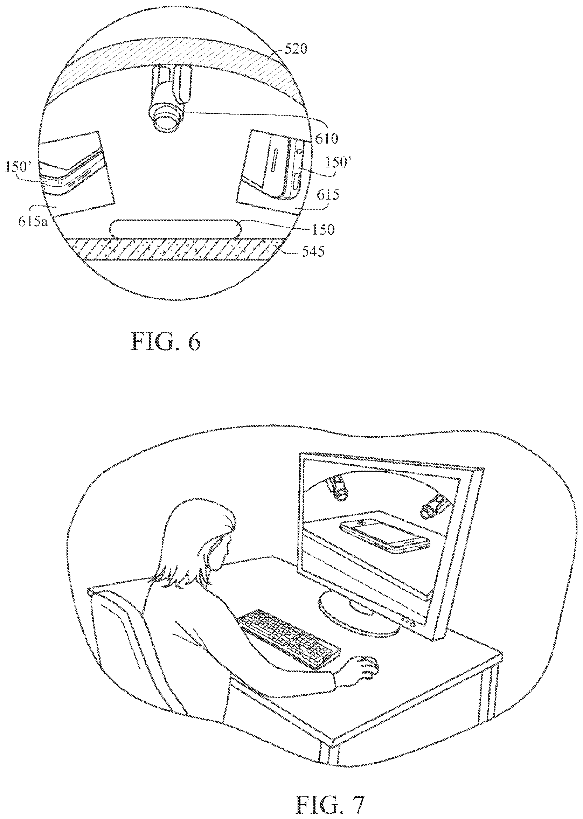

In yet another embodiment of the invention, as shown in FIGS. 6 and 7, an operator in a remote location visually inspects an electronic device **150** within an inspection area **106** of a kiosk **100** using at least one camera **610.** The operator also receives data from an electrical analysis of the electronic device **150** as explained below. In this manner, the remote operator provides human interaction for a reseller attempting to resell the electronic device **150.**

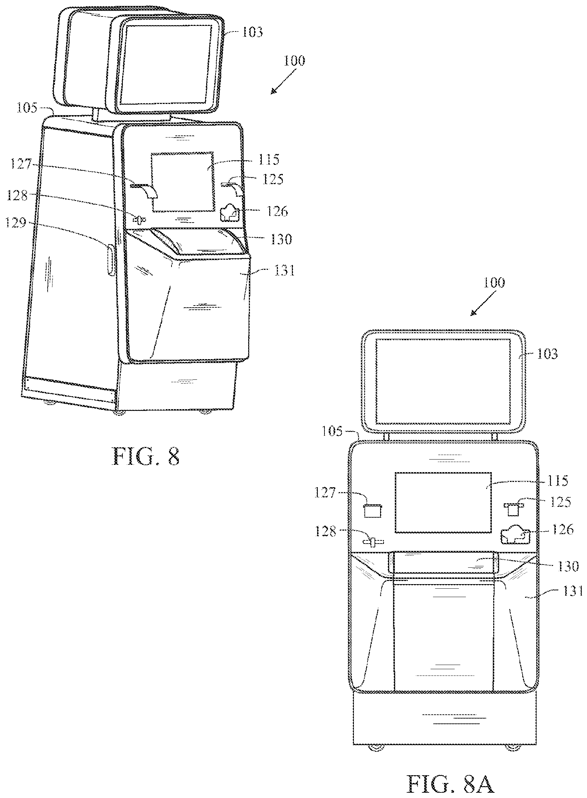

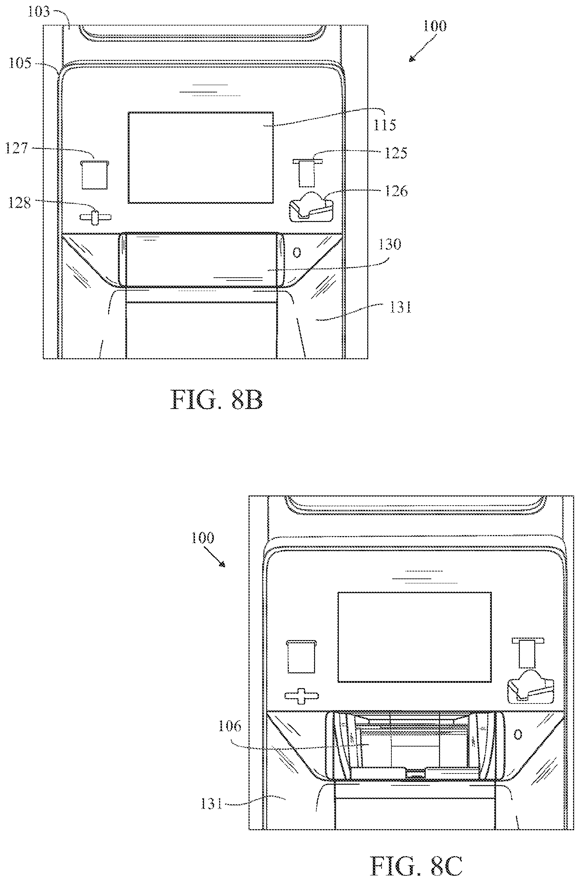

As shown in FIGS. 8, **8**A**, 8**B and **8**C, the kiosk **100** has a housing **105** in a pseudo-rectangular cube shape. A header **103** allows for marketing and videos. An access door **130** in a front body area **131** provides access to an inspection area **106** for electronic devices. The front of the housing **105** has a display screen **115** for providing information to a user, and acts as a user interface in a touch screen embodiment. The exterior of the housing **105** also preferably has a label printer **125,** a voucher dispenser **126,** a receipt printer **127,** and a cash or card dispenser **128.** The exterior housing may also have a thumbprint reader.

The kiosk **100** allows for automatic visual analysis of an electronic device to identify the electronic device and to determine electronic device is damaged in order to ascertain a value for recycling the electronic device. Further, the kiosk 100 also allows for electrical analysis of the electronic device.

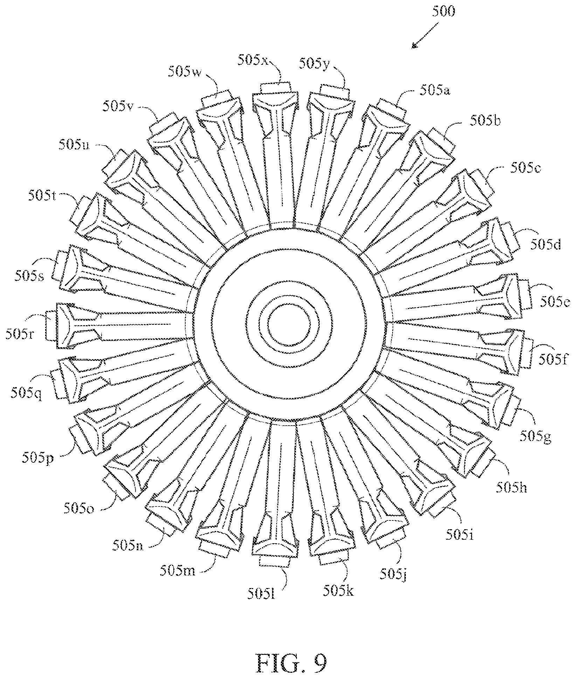

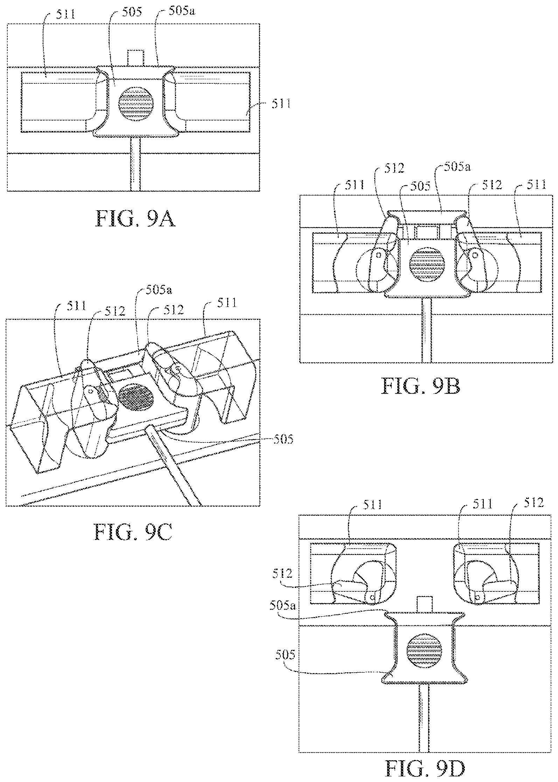

As shown in FIGS. 9, **9A, 9B, 9C** and **9D****,** the kiosk **100** comprises a carousel **500** containing a plurality of electrical connectors **505***a***-505***y***.** Each of the electrical connectors **505** has a unique connection plug for removable connection to an electronic device. Each of the electrical connectors **505***a***-505***y* has a cartridge removeably secured in the carousel **500.** Thus, new electrical connectors **505** can be substituted for older electrical connectors **505.** Further, the kiosk **100** is designed to allow for automatic removal of the electrical connector **505** using detachment mechanism **511.** In FIG. 9A, the electrical connector **505** is in a staging area, where it would be connected to a port of an electrical device (as shown FIG. 18). Next, as shown in FIGS. 9B and 9C, hinged arms **512** of the detachment mechanism **511** engage a moveable member of the electrical connector **505** to force the outward movement of the moveable member and the disconnection of the electrical connector **505** from a port of an electronic device (as shown in FIG. 18). As shown in FIG. 9D, the electrical connector **505** is retracted by a cable from the detachment mechanism **511.**

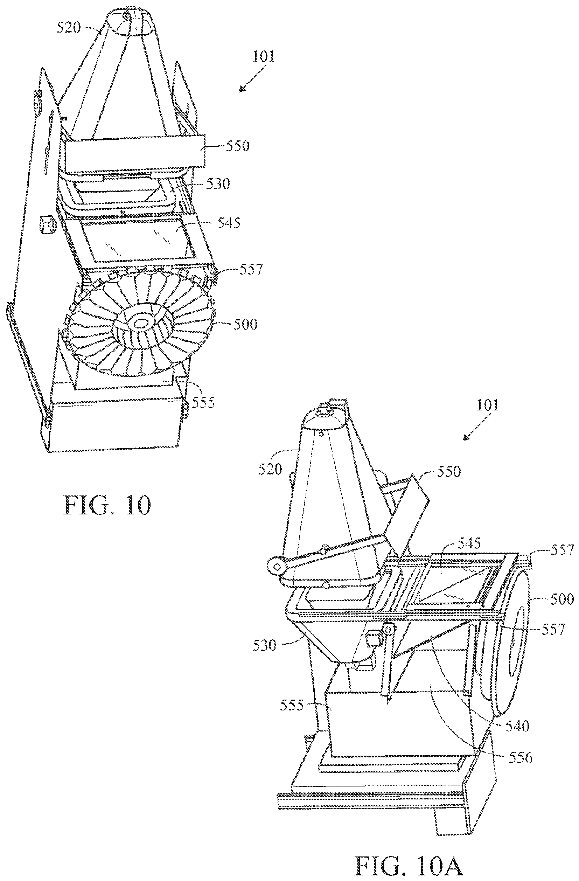

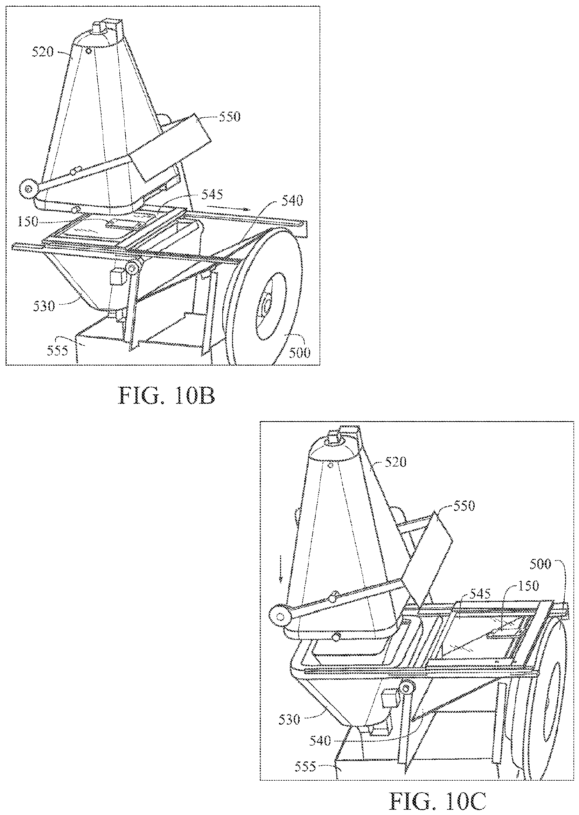

As shown in FIGS. 10, **10A****,** **10B** and **10C****,** the internal mechanism **101** of the kiosk **100** includes an upper chamber **520,** a lower chamber **530,** a binning plate **540,** a transparent plate **545,** a door **550,** a bin **555** and the carousel **500.** Preferably, the carousel **500** is able to hold approximately **25** electrical connectors **505,** wherein the electrical connectors **505** are interchangeable to easily adapt to the variations in USB and other like connections. As shown in FIG. 10B, a mobile phone **150** is placed on the transparent plate **545** and transferred to an inspection area **106** within upper chamber **520** and lower chamber **530.** Both the upper chamber and the lower chamber preferably have a bell-like shape. As shown in FIG. 10C, the mobile phone is moved between the upper chamber **520** and the lower chamber **530** for visual analysis. The transparent plate, preferably composed of glass of a transparent plastic material, allows for imaging components within the upper chamber **520** and lower chamber **530** to obtain multiple view images of the mobile phone **150.** Preferably, a **3-**D profile of the mobile phone is generated in order to provide visual analysis for identification and condition of the mobile phone. Once the visual analysis is complete, the transparent plate **545** moves out from between the upper chamber **520** and lower chamber **530.**

FIGS. 11, 11A, 11B, and 11C, show the automatic transport and binning of an electronic device **150** within the internal mechanism **101** of the kiosk **100.** As shown in FIG. 11, the door **550** is lowered to reside above the transparent plate **545,** which is then moved inward with the mobile phone **150** thereon. As shown in FIG. 11A, as the transparent plate **545** is moved inward, the mobile phone is blocked by the door **550** and engages binning plate **540** as the mobile phone begins to fall into an opening created by the inward movement of the transparent plate **545.** As shown in FIG. 11B, once the mobile phone is on the binning plate **540,** the binning plate **540** is slowly lowered on one side to open into the bin **555.** As shown in FIG. 11C, the mobile phone **150** slowly falls through an opening **556** into the bin **555** to secure the mobile phone **150** and for collection at a later time. The entire process performed at a rate of speed to prevent damage to the electronic device being recycled.

The kiosk **100** is of a typical size and shape of a vending machine, such as a soda machine, coin changing machine, can recycling machine, or other vending machines. The housing **105** of the kiosk **100** protects the internal mechanism **101** and secures electronic devices submitted for recycling. The housing **105** is preferably constructed of a metal material, such as steel or aluminum, to prevent authorized access to the kiosk **100.**

The inspection area **106** is preferably designed to permit a detailed visual inspection of an electronic device such as a mobile phone, tablet computer, e-reader, MP3 players, PDA. The walls of the inspection area are preferably white and/or mirrored to provide imaging of the electronic device.

The couplings from the kiosk **100** and to a remote computer are preferably a single coupling to a communications network such as the internet via wired LAN, wireless LAN, cellular or any other proprietary communications system. The Kiosk **100** preferably includes a processor **160** for processing the information obtained from the mobile phone and for controlling the components of the kiosk **100.** Preferably, the processor **160** is a standard personal computer ("PC") or other type of embedded computer running any operating system such as Linux or MAC OS. The processor **160** is most preferably a small form factor PC with integrated hard disk drive ("HDD"), central processing unit ("CPU") and universal serial bus ("USB") ports to communicate with the other components of the kiosk **100.** One most preferred CPU is a DELL PC OPTIPLEX **780.** Alternatively, the processing means is a microprocessor with a standalone motherboard which interfaces to a discrete HDD, power supply and the other components of the kiosk **100.** The kiosk **100** preferably includes a memory **161** or other storage device, such as a disk drive, that stores the executable applications, test software, databases and other software required to operate the recycling kiosk **100.**

The external communication component for the kiosk **100** preferably includes a wired Ethernet to provide connection to the internet, or alternatively the external communication component includes a wireless modem such as GSM, CDMA, 3G and 4G technologies for data communications.

As shown in FIGS. 14-16, the visual inspection of an electronic device such as a mobile phone **150** in the inspection area **106** is preferably performed by at least one camera **610** within the upper chamber **520.** The lower chamber **530** also preferably has at least one camera or other imaging component such as a scanner. Alternatively, the visual inspection is performed by multiple cameras. A preferred camera **610** is a 1 megapixel machine vision camera. If a single camera **610** is utilized in the inspection area **106,** the camera **610** preferably is movable to increase a field of view of the inspection area **106** to inspect the electronic device **150** such as a mobile phone placed on the transparent plate **545.** The camera **161** is preferably movable. Preferably the camera **610** is positioned to image a LCD screen **153** of the electronic device **150** to determine if the LCD screen **153** is damaged. The interior surfaces of the upper chamber **520** and lower chamber **530** preferably include mirrors **615** in order to optimize viewing of an electronic device positioned within the inspection area **106.** As shown in FIG. 16, a reflection **150'** of a mobile phone **150** is illustrated. The camera **610** is also preferably movable to image a data port of the electronic device to determine the type of electrical connector **505** for the electronic device in order to perform an electrical analysis of the electronic device. Alternatively, the entire interior surfaces of the upper chamber **520** and the lower chamber **530** are mirrored for optimization of imaging of the electronic device. The camera(s) alternatively are CCD or CMOSS.

Also, time is of the essence when inspecting the electronic device. The analysis is completed within an illumination period of the electronic device, wherein the illumination device comprises the time from when the display screen of the electronic device is illuminated to the time the display screen converts to an energy conserving mode, evidences by the screen blacking out. During the inspection, the brightness of the illumination is also measured. The lighting preferably comprises LED based lighting with beam splitters, or alternatively UV lighting.

The transparent plate optionally operates as a weight scale to obtain a mass of the electronic device for use in determining a remuneration value. For example, if the mass of the electronic device **150** is less than set forth in a vendor specification for the electronic device, then one or more components of the electronic device may be missing, such as the battery for the electronic device **150.**

Preferably, visual inspection and recognition software is utilized by the kiosk **100** to analyze an electronic device. In one preferred method, a recognition algorithm is applied to a specific make and model of a electronic device. The visual inspection and recognition software determines the borders of a electronic device **150** under inspection to determine the external dimensions of the electronic device **150.** The external dimensions are utilized to determine a subset of possible mobile phones from a master database of mobile phones stored in the memory **161** of the kiosk **100** or available online to the kiosk **100** using external communications. The visual inspection and recognition software then preferably uses a set of secondary and tertiary features to further distinguish the electronic device **150.** These secondary and tertiary features can include placement and size of the display screen, placements and size of the keyboard, unique buttons, placement of ports, and other distinguishing features. Once an exact make and model of the electronic device is determined, the visual inspection and recognition software subtracts an image of the electronic device **150** from an image of a perfect electronic device for the same make and model. The result of the subtraction is preferably a quantifiable number of pixels that are calibrated into categories of broken or missing parts, cracked screen, and low, medium or high wear.

Alternatively, the visual inspection is performed using neural network pattern recognition techniques to identify the mobile phone **150,** then filter algorithms are utilized to determine defects such as cracked screens. Further, those skilled in the pertinent art will recognize that other visual inspection techniques may be employed without departing from the scope of the present invention as defined by the appended claims.

The electrical analysis of an electronic device **150** is preferably performed using an electrical connector **505** connected to a data port of a electronic device **150** as discussed above in reference to FIGS. 2, 2A, 2B, 2C and 2D. Once the make and model of the electronic device **150** is determined, either by visual inspection or user input using a user interface such as touch screen display **115,** the correct electrical connector **505** is dispensed by the carousel **500** for connection to the data port of the electronic device **150.** The connection of the electrical connector **505** to the electronic device **150** is preferably performed automatically by the kiosk **100.** Alternatively, the proper choice of electrical connector **505** is rotated into position on the carousel **500** and illuminated or in some other way presented to the consumer for manual connection of the electrical connector **505** to the data port of the electronic device **150.** Electrical analysis software is preferably utilized by the kiosk **100** to interact with the electronic device **150.** The electrical analysis preferably determines if the mobile phone is capable of activation, maintaining a charge, performing correctly, powering a display screen of the electronic device **150,** providing make, model, serial number and other pertinent information about the electronic device **150,** and other relevant information.

The touch screen display **115** preferably includes a keypad, user selection buttons, soft keys, and other similar components. The touch screen display **118** is used to enable quick and easy access to various features and functions of the recycling kiosk **100.** The recycling kiosk **100** preferably dispenses various forms of payment, including cash, credit cards, debit cards, chip cards, gift cards from the kiosk's host location or other gift cards, and other magnetic striped cards or electronic payment methods. The kiosk **100** also uses the barcode reader to read the barcode identification on the inside of the battery pack. A UV detector is used for reading "invisible" barcodes in use by certain vendors such as Apple and others. The bar code reader, camera, and/or UV detector of the kiosk **100** is another technique used to identify the product model, IMEI #, and/or FCC ID. Alternatively, the kiosk **100** communicates with the electronic device **150** using wireless communications to test and if necessary erase data from the electronic device **150.**

FIG. 13 is a block diagram of the main components of the kiosk **100.** A processor **160** is preferably in communication with the other components of the kiosk **100.** The memory **161** preferably contains a database of information on multiple mobile phones including images, physical characteristics, prices and other similar information. The external communications **167** preferably communicates through a wireless connection or Ethernet with a network to receive and transmit information to a remote site. The power supply **170** is preferably received through a plug-in connection to a wall outlet. The mechanical components **165** include the electrical connector carousel **500,** the transparent plate **545,** the binning plate **540,** the door **550,** and other similar components. The camera **610** or cameras, electrical connectors, and a user interface interact with the processor **160** as discussed above. FIG. 12 illustrates an internal back of a recycling kiosk **100.** As shown a processor **160** is preferably a personal computer having a battery backup **170***a*, a wireless connection **167** for external communications, an electrical connection **140,** a receipt dispenser **104** and a display screen **115.**

The processor **160** identifies the electronic device **150** submitted for recycling using information from the visual inspection and user interface. The processor **160** also determines the proper electrical connector **505** for connection to the data port of the electronic device **150** using information obtained during the visual inspection or from the user interface. The processor **160** also directs and receives information from the electrical analysis of the electronic device **150** performed using the electrical connector **505** connected to the data port of the electronic device **150.** The processor also preferably determines a financial remuneration for the submitted electronic device **150** based on the visual inspection, optionally the electrical analysis and data stored in the memory **161** of the kiosk or information provided externally through the external communication component **167.**

A flow chart for a preferred recycling method is shown in FIG. 19. At step **301** a customer elects to sell or recycle an electronic device. The customer checks to see if the electronic device is supported for sale/refurbishing from a list on the screen of the kiosk. The customer activates the on-screen menu system and either enters the phone model directly or goes through a series of menus to determine if the electronic device is eligible for sale or only for recycling. At decision block **302** it is determined if the electronic device is only available for recycling. If yes, (i.e. it is not on the list of electronic device available for reselling) the customer can insert the electronic device into receptacle at step **303** and the electronic device falls into bin **112** for recycling.

If the electronic device is supported for refurbishment/resale the customer is then encouraged to engage the testing/rating operation of the system. At step **304,** the system has determined the correct connector to couple to the electronic device. Connectivity options and are not limited to cable, standard or proprietary connectors, hard docks, reading removable or external physical memory or other wireless methods like WiFi, Bluetooth, RFID, NFC, and the like. At step **305** the electronic device is connected and inserted into inspection area **106.** If this has been done correctly, the customer is given some indication (e.g. a green light) and the system proceeds to step **306.** At step **306** the electronic device is tested for operation using diagnostics and operating via, for example, the OMSI interface. The diagnostics preferably includes electrical and physical testing including testing the electronic device's battery, screen, memory, button functionality and structural integrity.

Preferably, the electronic device is imaged and analysis software is used to identify scratches, cracks, wear patterns, dents, broken or missing pieces, inclusion of features such as lenses, buttons, connectors, badges, labeling and/or branding. Identification may be done by image comparison or other similar methods where the image taken of the electronic device is normalized and compared to a reference image. Other inspection methods may be used in conjunction with visual and/or electrical testing including weighing to determine specific weight and use that data to further refine verification of manufacturer and verification of exact device model. In another embodiment, the photographic image is used to identify the correct manufacturer and model number/product number. Visual identification could include any combination of the following: calculations based upon measurement, physical (e.g., mm, inches), pixel count or other. Identification based upon electronic device dimensions, location/size of buttons, LCD and other physical characteristics. One camera or multiple cameras may be used to determine height, width, depth as needed. Identification based on OCR (Optical Character Recognition) of identifiers such as Carrier (for phone and tablet computers), brand, model, serial number, other identifiers. Identification based upon barcodes. Consumer may be asked to orient CE on its front, back, side and then asked to change orientation as needed. Consumer may even be asked to remove CE cover(s), batteries and the like in order to gain access to identifiable items, such alphanumeric or barcode data. The kiosk **100** provides a way to use visual inspection with electrical inspection to identify a device, determine its value, and reduce possible fraud.

In one embodiment, the kiosk **100** communicates with the carrier associated with a mobile phone to collect any information that could be germane to the device, including, for example, validation or authentication, registered ownership, account status, time in service, and the like. In some cases, when the customer's identification information does not match the registered owner information, the kiosk **100** automatically contacts the assumed owner in some manner (automated telephone call, email, text message, etc.) to alert the owner of the phone of the possible transaction.

Another feature of an embodiment of the kiosk **100** is to determine if there is personal information on the electronic device. This is determined by the presence of data in particular storage registers in the memory (e.g., quick-key stored numbers) or by looking at file types (jpegs, mp3's, etc.,), or just assuming all non-default storage locations must contain personal data. The customer is offered the chance to erase the data from the phone. One option allows the customer to request that the data be first downloaded and then sent to a location designated by the customer (e.g., email address, website, etc.). In another embodiment, there is a slot for the customer to enter a memory card (e.g. USB drive, memory stick, etc.) whereupon the kiosk **100** uploads the data to the memory device. In still another embodiment, the kiosk **100** offers a web location from which the user retrieves the data at some later time if desired. In another embodiment, the user elects to have the data placed in another electronic device purchased by the customer at the kiosk **100** or in the location of the kiosk **100** or some other store. The customer preferably selects a user name and password to access the system provided storage location.

Once the value is determined, the value is provided at step **307** to the kiosk. The kiosk **100** then offers the customer a price or other remuneration for the phone that is typically less than the resale value. In other embodiments, the kiosk **100** offers the customer a price or remuneration that is at the current real-time market price. At step **308** it is determined if the user wishes to accept the offer. If not, the kiosk **100** proceeds to step **309** and opens the door and releases the electronic device back to the customer. If the user wishes to accept the offer, the kiosk **100** proceeds to step **310.** At a point where the user accepts a price, the kiosk **100** may then lock down the inspection area to prevent further access to the electronic device by the user. The kiosk **100** then disconnects any cables that have been attached. At step **310,** the user indicates acceptance of the decision by confirming on the keypad or touch-screen. At this point the kiosk **100** proceeds with deleting the personal data from the electronic device. In addition, once the transaction is confirmed, the kiosk **100** tags the electronic device with a transaction number that is associated with the diagnostic data and the transaction itself. This is preferably a printed adhesive label that is affixed physically to the phone and/or the loading of electronic data corresponding to the transaction number onto the phone itself for traceability purposes.

At step **311,** the kiosk **100** completes any additional testing and diagnostics of the electronic device, disconnects the cable from the electronic device, and prints a receipt for the customer. Transfer of funds may be authorized via the kiosk **100** by crediting a customer credit card or account by dispensing cash, or by dispensing a voucher or coupon. At step **312** the kiosk **100** updates its inventory database and transmits the update via a communications network to a kiosk server.

One preferred method for a pre-acquisition auction is illustrated in the flow chart of FIG. 20. A method for analysis of an electronic device and financial remuneration to a user for submission of the electronic device is generally designated **1000.** At block **1001,** an electronic device is identified. At block **1002,** bids are solicited for a used model of the electronic device in a predetermined condition. The bids are preferably solicited online through a website and the bidders are preferably pre-qualified. At block **1003,** bids for the used model of the electronic device are received from a plurality of bidders. At block **1004,** a purchase price to pay for the used model of the electronic device is set based on the plurality of bids received from the plurality of bidders. Typically, the purchase price is based on the winning bid. The shipping information for the winning bidder is preferably obtained at this time. At block **1005,** a used model of the electronic device is identified at a recycling kiosk for the electronic device. Preferably, a consumer desires to recycle the electronic device. At **1006,** the integrity of the used model of the electronic device is verified at the recycling kiosk. Preferably, the condition of the electronic device is established at the kiosk, with the kiosk determining any damage to the electronic device based on visual and electronic analysis of the electronic device. At block **1007,** the electronic device is evaluated and graded. At block **1008,** the purchase price for the used model of the electronic device is offered to a consumer at the kiosk. At block **1009,** the electronic device is automatically binned after purchasing the used model of the electronic device from the consumer at the kiosk. At block **1010,** the electronic device is shipped to the winning bidder.

Preferably, the kiosk **100** of the method comprises a housing **105,** the housing **105** comprising a user interface on an exterior surface of the housing for the user to input information, an upper dome and a lower dome, wherein the upper dome and the lower dome comprise a plurality of mirrors. The kiosk **100** further comprises an upper chamber camera, a lower chamber camera and a transparent surface. The kiosk **100** further comprises a processor **160** within the housing and in communication with the at least one camera, the processor **160** configured to identify the brand and model number of the mobile communication device based on at least one of the information from the user and the images from the at least one camera, the processor **160** configured to determine a purchase price for the used model of the mobile communication device.

An alternative method for a pre-acquisition auction begins with a mobile communication device identified for acquisition. Bids are solicited for a used model of the mobile communication device. Bids for the used model of the mobile communication device are received from a plurality of bidders. A purchase price to pay for the used model of the mobile communication device is set based on the plurality of bids received from the plurality of bidders. A used model of the mobile communication device is identified at a recycling kiosk for the mobile communication device. The integrity of the used model of the mobile communication device is verified at the recycling kiosk. The purchase price for the used model of the mobile communication device is offered to a consumer at the kiosk. The mobile communication device is automatically binned after purchasing the used model of the mobile communication device from the consumer at the kiosk. The mobile communication device is shipped to the winning bidder.

Another alternative method for a pre-acquisition auction begins with establishing a plurality of pre-acquisition purchase prices. Each of the plurality of pre-acquisition purchase prices is established for a recycled electronic device in a predetermined condition. Each of the pre-acquisition purchase prices is established by a winning bid from a bidder of a plurality of bidders for a recycled electronic device. An electronic device is positioned in an inspection area of a kiosk. The inspection area has at least one camera. The electronic device or a portion thereof is imaged. The image of the electronic device obtained by the at least one camera disposed in the inspection area is inspected to determine if the electronic device has any defects. The electronic device is identified and a condition of the electronic device is determined. A matching pre-acquisition purchase price is selected from the plurality of pre-acquisition purchase prices for the electronic device. A consumer is offered the pre-acquisition purchase price for the electronic device.

A flow chart of a method **5000** for reselling electronic devices in compliance with second hand dealer laws is shown in FIG. 22. At block **5001,** an electronic device is submitted for reselling at an apparatus. At block **5002,** an identification of a reseller of the electronic device is acquired at the card reader of the kiosk. At block **5003,** a fingerprint of the reseller is acquired at the fingerprint reader of the kiosk, preferably a thumbprint. At block **5004,** an image of the reseller is acquired by the external cameras of the kiosk. At block **5005,** an identification of an electronic device is acquired at the kiosk. At block **5006,** transfer data for the reseller is collected and includes the recycler image, the reseller identification, the fingerprint of the reseller, and the identification of the electronic device. At block **5007,** the transfer data is transmitted to a server over a network. At block **5008,** the transfer data is analyzed in view of a second hand dealer law for a jurisdiction of a location of the kiosk. At block **5009,** a procedure is determined for compliance of the second hand dealer law based on the jurisdiction of the kiosk and the goods resold. At block **5010,** the operation complies with the second hand dealer law.

The method and system for complying with second hand dealer laws can be utilized with Bowles, U.S. patent application Ser. No. 13/792,030, for a Mini-Kiosk For Recycling Electronic Devices, filed on Mar. 9, 2013. The method and system for complying with second hand dealer laws can be utilized with Bowles et al, U.S. patent application Ser. No. 13/753,539, for a Visual Analysis Of Recyclable Electronic Devices, filed on Jan. 30, 2013. The method and system for complying with second hand dealer laws can be utilized with Bowles et al, U.S. patent application Ser. No. 13/658,825, for a Method And Apparatus For Recycling Electronic Devices, filed on Oct. 24, 2012. The method and system for complying with second hand dealer laws can be utilized with Bowles et al, U.S. patent application Ser. No. 13/733,984, for a Method And Apparatus For Recycling Electronic Devices, filed on Jan. 14, 2013. The method and system for complying with second hand dealer laws can be utilized with Bowles et al, U.S. patent application Ser. No. 13/705,252, for a Pre-Acquisition Auction For Recycled Electronic Devices, filed on Dec. 5, 2012.

From the foregoing it is believed that those skilled in the pertinent art will recognize the meritorious advancement of this invention and will readily understand that while the present invention has been described in association with a preferred embodiment thereof, and other embodiments illustrated in the accompanying drawings, numerous changes modification and substitutions of equivalents may be made therein without departing from the scope of this invention which is intended to be unlimited by the foregoing except as may appear in the following appended claims. Therefore, the embodiments of the invention in which an exclusive property or privilege is claimed are defined in the following appended claims.

## Claims

1. A system for reselling electronic devices, comprising:
a kiosk (100), having:
an identification reader (93),
an exterior imaging component (91),
a processor (160),
an inspection area (106); and
an imaging component (610) within the inspection area (106),
wherein the kiosk (100) is configured to:
obtain a first image of the reseller in real-time using the exterior imaging component (91),
receive an identification of the reseller at the kiosk (100) from the identification reader (93) and derive a second image of the reseller from the identification of the reseller,
receive an identification of the electronic device at the kiosk (100), and
collect as transfer data: the first image of the reseller, the identification information of the reseller including the second image of the reseller, and the identification of the electronic device;
a remote server (75) connected to the kiosk over (100) a network, wherein the kiosk (100) is configured to transmit the transfer data to the remote server (75) over the network in real-time; and
a remote display,
wherein the server (75) is configured to, in real-time:
transmit the first image of the reseller and the identification information including the second image of the reseller to the remote display for display on the remote display, for a remote operator to approve or reject each transaction at the kiosk (100).

2. The system of claim 1, wherein:
the kiosk (100) further comprises an electrical connector (505) within the inspection area (106) for connection to an electronic device (150) positioned within the inspection area (106); and
the kiosk (100) is configured to send data from an electrical analysis of the electronic device (150) to the remote operator.

3. The system of claim 1 or 2, wherein the kiosk (100) is configured to send data from the imaging component (610) within the inspection area (106) to the remote operator, for the remote operator to visually inspect the electronic device (150).

4. The system according to any preceding claim, wherein the kiosk (100) further comprises a fingerprint reader (92) and is configured to collect as transfer data a fingerprint or thumbprint of the reseller.

5. The system according to any preceding claim, wherein the kiosk (100) is configured to verify the identity of the reseller by using facial recognition algorithms on the image acquired at the kiosk (100) and the image of the reseller's identification.

6. The system according to any preceding claim, wherein the server (75) is configured to use facial recognition software to identify the reseller based on the image acquired at the kiosk (100) and the image of the reseller's identification, and the server (75) is configured to compare the two images.

7. The system according to any preceding claim, further configured to store the transfer data in a database.

8. The system according to any of claims 2 to 7, wherein the kiosk (100) further comprises:
a housing; and
a user interface on an exterior surface of the housing for the user to input information;
wherein the processor (160) is in communication with the imaging component (91), the electrical connector (505) and the user interface, and the processor (160) is configured to:
identify a brand and model number of the electronic device (150) based on at least one of: the information from the user or the images from the imaging component (91),
perform a visual analysis of the display of the electronic device (150),
perform an electrical analysis of the electronic device (150), determine a financial remuneration value for the electronic device (150) and
manage a data transfer from the electronic device (150).

9. A method for reselling electronic devices, comprising:
receiving an electronic device (150) for reselling at a kiosk (100);
obtaining a first image of a reseller in real-time using an exterior imaging component (91) of the kiosk (100),
receiving an identification of the reseller at the kiosk (100) from an identification reader (93) and deriving a second image of the reseller from the identification of the reseller,
receiving an identification of the electronic device (150) at the kiosk (100), and
collecting as transfer data: the first image of the reseller, the identification information of the reseller including the second image of the reseller, and the identification of the electronic device (150),
transmitting the transfer data to a remote server (75) over a network in real-time; and, in real-time:
displaying the first image of the reseller and the identification information including the second image of the reseller on a remote display, for a remote operator to approve or reject each transaction at the kiosk (100).

10. The method according to claim 9, further comprising the reseller interacting with the remote operator.

11. The method of claim 9 or 10, further comprising:
connecting an electrical connector (505) to the electronic device (150) within the inspection area (106); and
sending data from an electrical analysis of the electronic device (150) to the remote operator.

12. The method of any of claims 9, 10 or 11, further comprising:
sending data from the imaging component (610) within the inspection area (106) to the remote operator, for the remote operator to visually inspect the electronic device (150).

13. The method of any of claims 9 to 12, further comprising:
the kiosk (100) verifying the identity of the reseller by using facial recognition algorithms on the image of the reseller acquired at the kiosk (100) and the image of the reseller's identification; or
the server (75) using facial recognition software to identify the reseller based on the image acquired at the kiosk (100) and the image of the reseller's identification, and the server (75) comparing the two images.

14. The method according to any of claims 9 to 13, further comprising:
a processor (160) in the kiosk (100):
identifying the brand and model number of the electronic device (150) based on at least one of: the information from the user or the images from the imaging component (91),
performing a visual analysis of the display of the electronic device (150),
performing an electrical analysis of the electronic device (150),
determining a financial remuneration value for the electronic device (150); and
managing a data transfer from the electronic device (150).

15. The system or method of any preceding claim, wherein:
the electronic device (150) is a mobile phone; and/or
the identification of the electronic device (150) is an IMEI, MEID, or serial number; and/or
the identification of the electronic device (150) is compared against a stolen electronic device database as a filter prior to purchasing the electronic device (150) from the reseller.

## Patentansprüche

1. System zum Wiederverkaufen elektronischer Vorrichtungen, umfassend:
einen Kiosk (100), aufweisend:
einen Identifikationsleser (93),
eine externe Bildgebungskomponente (91),
einen Prozessor (160),
einen Inspektionsbereich (106); und
eine Bildgebungskomponente (610) innerhalb des Inspektionsbereichs (106),
wobei der Kiosk (100) konfiguriert ist zum:
Erlangen eines ersten Bilds des Wiederverkäufers in Echtzeit unter Verwendung der externen Bildgebungskomponente (91),
Erhalten einer Identifikation des Wiederverkäufers an dem Kiosk (100) von dem Identifikationsleser (93) und Ableiten eines zweiten Bilds des Wiederverkäufers von der Identifikation des Wiederverkäufers,
Erhalten einer Identifikation der elektronischen Vorrichtung an dem Kiosk (100) und
Sammeln als Transferdaten: das erste Bild des Wiederverkäufers, die Identifikationsinformationen des Wiederverkäufers, einschließlich des zweiten Bilds des Wiederverkäufers, und die Identifikation der elektronischen Vorrichtung;
einen Fernserver (75), der über (100) ein Netzwerk mit dem Kiosk verbunden ist, wobei der Kiosk (100) konfiguriert ist, um die Transferdaten in Echtzeit über das Netzwerk an den Fernserver (75) zu übertragen; und
eine Fernanzeige,
wobei der Server (75) konfiguriert ist zum, in Echtzeit:
Übertragen des ersten Bilds des Wiederverkäufers und der Identifikationsinformationen, einschließlich des zweiten Bilds des Wiederverkäufers, an die Fernanzeige für eine Anzeige auf der Fernanzeige dafür, dass ein Fernbediener jede Transaktion an dem Kiosk (100) genehmigen oder ablehnen kann.

2. System nach Anspruch 1, wobei:
der Kiosk (100) ferner einen elektrischen Steckverbinder (505) innerhalb des Inspektionsbereichs (106) für eine Verbindung mit einer elektronischen Vorrichtung (150), die innerhalb des Inspektionsbereichs (106) positioniert ist, umfasst; und
der Kiosk (100) konfiguriert ist, um Daten von einer elektrischen Analyse der elektronischen Vorrichtung (150) an den Fernbediener zu senden.

3. System nach Anspruch 1 oder 2, wobei der Kiosk (100) konfiguriert ist, um Daten von der Bildgebungskomponente (610) innerhalb des Inspektionsbereichs (106) an den Fernbediener dafür zu senden, dass der Fernbediener die elektronische Vorrichtung (150) visuell inspizieren kann.

4. System nach einem der vorstehenden Ansprüche, wobei der Kiosk (100) ferner einen Fingerabdruckleser (92) umfasst und konfiguriert ist, um als Transferdaten einen Fingerabdruck oder Daumenabdruck des Wiederverkäufers zu sammeln.

5. System nach einem der vorstehenden Ansprüche, wobei der Kiosk (100) konfiguriert ist, um die Identität des Wiederverkäufers durch Verwenden von Gesichtserkennungsalgorithmen auf dem Bild, das an dem Kiosk (100) erfasst wird, und dem Bild der Identifikation des Wiederverkäufers zu verifizieren.

6. System nach einem der vorstehenden Ansprüche, wobei der Server (75) konfiguriert ist, um Gesichtserkennungssoftware zu verwenden, um den Wiederverkäufer basierend auf dem Bild, das an dem Kiosk (100) erfasst wird, und dem Bild der Identifikation des Wiederverkäufers zu identifizieren, und wobei der Server (75) konfiguriert ist, um die beiden Bilder zu vergleichen.

7. System nach einem der vorstehenden Ansprüche, das ferner konfiguriert ist, um die Transferdaten in einer Datenbank zu speichern.

8. System nach einem der Ansprüche 2 bis 7, wobei der Kiosk (100) ferner umfasst:
ein Gehäuse; und
eine Benutzerschnittstelle auf einer Außenoberfläche des Gehäuses dafür, dass der Benutzer Informationen eingeben kann;
wobei der Prozessor (160) mit der Bildgebungskomponente (91), dem elektrischen Steckverbinder (505) und der Benutzerschnittstelle in Kommunikation steht, und der Prozessor (160) konfiguriert ist zum:
Identifizieren einer Marke und Modellnummer der elektronischen Vorrichtung (150) basierend auf mindestens einem von: den Informationen von dem Benutzer oder den Bildern von der Bildgebungskomponente (91),
Durchführen einer visuellen Analyse der Anzeige der elektronischen Vorrichtung (150),
Durchführen einer elektrischen Analyse der elektronischen Vorrichtung (150), Bestimmen eines finanziellen Vergütungswerts für die elektronische Vorrichtung (150) und
Verwalten eines Datentransfers von der elektronischen Vorrichtung (150).

9. Verfahren zum Wiederverkaufen elektronischer Vorrichtungen, umfassend:
Erhalten einer elektronischen Vorrichtung (150) zum Wiederverkaufen an einem Kiosk (100);
Erlangen eines ersten Bilds eines Wiederverkäufers in Echtzeit unter Verwendung einer externen Bildgebungskomponente (91) des Kiosks (100),
Erhalten einer Identifikation des Wiederverkäufers an dem Kiosk (100) von einem Identifikationsleser (93) und Ableiten eines zweiten Bilds des Wiederverkäufers von der Identifikation des Wiederverkäufers,
Erhalten einer Identifikation der elektronischen Vorrichtung (150) an dem Kiosk (100) und
Sammeln als Transferdaten: das erste Bild des Wiederverkäufers, die Identifikationsinformationen des Wiederverkäufers, einschließlich des zweiten Bilds des Wiederverkäufers, und die Identifikation der elektronischen Vorrichtung (150),
Übertragen der Transferdaten in Echtzeit über ein Netzwerk an einen Fernserver (75);
und, in Echtzeit:
Anzeigen des ersten Bilds des Wiederverkäufers und der Identifikationsinformationen, einschließlich des zweiten Bilds des Wiederverkäufers, auf einer Fernanzeige dafür, dass ein Fernbediener jede Transaktion an dem Kiosk (100) genehmigen oder ablehnen kann.

10. Verfahren nach Anspruch 9, ferner umfassend, dass der Wiederverkäufer mit dem Fernbediener interagiert.

11. Verfahren nach Anspruch 9 oder 10, ferner umfassend:
Verbinden eines elektrischen Steckverbinders (505) mit der elektronischen Vorrichtung (150) innerhalb des Inspektionsbereichs (106); und
Senden von Daten von einer elektrischen Analyse der elektronischen Vorrichtung (150) an den Fernbediener.

12. Verfahren nach einem der Ansprüche 9, 10 oder 11, ferner umfassend:
Senden von Daten von der Bildgebungskomponente (610) innerhalb des Inspektionsbereichs (106) an den Fernbediener dafür, dass der Fernbediener die elektronische Vorrichtung (150) visuell inspizieren kann.

13. Verfahren nach einem der Ansprüche 9 bis 12, ferner umfassend:
der Kiosk (100) überprüft die Identität des Wiederverkäufers durch Verwenden von Gesichtserkennungsalgorithmen auf dem Bild des Wiederverkäufers, das an dem Kiosk (100) erfasst wird, und dem Bild der Identifikation des Wiederverkäufers; oder
der Server (75) verwendet Gesichtserkennungssoftware, um den Wiederverkäufer basierend auf dem Bild, das an dem Kiosk (100) erfasst wird, und dem Bild der Identifikation des Wiederverkäufers zu identifizieren, und der Server (75) vergleicht die beiden Bilder.

14. Verfahren nach einem der Ansprüche 9 bis 13, ferner umfassend:
ein Prozessor (160) in dem Kiosk (100):
identifiziert die Marke und Modellnummer der elektronischen Vorrichtung (150) basierend auf mindestens einem von: den Informationen von dem Benutzer oder den Bildern von der Bildgebungskomponente (91),
führt eine visuelle Analyse der Anzeige der elektronischen Vorrichtung (150) durch,
führt eine elektrische Analyse der elektronischen Vorrichtung (150) durch, bestimmt einen finanziellen Vergütungswert für die elektronische Vorrichtung (150); und
verwaltet einen Datentransfer von der elektronischen Vorrichtung (150).

15. System oder Verfahren nach einem der vorstehenden Ansprüche, wobei:
die elektronische Vorrichtung (150) ein Mobiltelefon ist; und/oder
die Identifikation der elektronischen Vorrichtung (150) eine IMEI, MEID oder Seriennummer ist; und/oder
die Identifikation der elektronischen Vorrichtung (150) als ein Filter vor einem Kaufen der elektronischen Vorrichtung (150) von dem Wiederverkäufer mit einer Datenbank für gestohlene elektronische Vorrichtungen verglichen wird.

## Revendications

1. Système de revente de dispositifs électroniques comprenant :
un kiosque (100), ayant :
un lecteur d'identification (93),
un composant d'imagerie extérieur (91),
un processeur (160),
une zone d'inspection (106) ; et
un composant d'imagerie (610) au sein de la zone d'inspection (106),
dans lequel le kiosque (100) est conçu pour :
obtenir une première image du revendeur en temps réel à l'aide du composant d'imagerie extérieur (91),
recevoir une identification du revendeur au niveau du kiosque (100) à partir du lecteur d'identification (93) et dériver une seconde image du revendeur à partir de l'identification du revendeur,
recevoir une identification du dispositif électronique au niveau du kiosque (100), et
recueillir comme données de transfert : la première image du revendeur, les informations d'identification du revendeur, y compris la seconde image du revendeur, et l'identification du dispositif électronique ;
un serveur distant (75) connecté au kiosque (100) par l'intermédiaire d'un réseau, dans lequel le kiosque (100) est conçu pour transmettre en temps réel les données de transfert au serveur distant (75) par l'intermédiaire du réseau ; et
un afficheur à distance,
dans lequel le serveur (75) est conçu pour, en temps réel :
transmettre la première image du revendeur et les informations d'identification, y compris la seconde image du revendeur, à l'afficheur à distance pour affichage sur l'afficheur à distance, pour qu'un opérateur à distance approuve ou rejette chaque transaction au niveau du kiosque (100).

2. Système selon la revendication 1, dans lequel :
le kiosque (100) comprend en outre un connecteur électrique (505) au sein de la zone d'inspection (106) pour la connexion à un dispositif électronique (150) positionné dans la zone d'inspection (106) ; et
le kiosque (100) est conçu pour envoyer des données provenant d'une analyse électrique du dispositif électronique (150) à l'opérateur à distance.

3. Système selon la revendication 1 ou 2, dans lequel le kiosque (100) est conçu pour envoyer des données provenant du composant d'imagerie (610) au sein de la zone d'inspection (106) à l'opérateur à distance, pour que l'opérateur puisse inspecter visuellement le dispositif électronique (150).

4. Système selon l'une quelconque des revendications précédentes, dans lequel le kiosque (100) comprend en outre un lecteur d'empreintes digitales (92) et est conçu pour collecter comme données de transfert une empreinte digitale ou une empreinte de pouce du revendeur.

5. Système selon l'une quelconque des revendications précédentes, dans lequel le kiosque (100) est conçu pour vérifier l'identité du revendeur à l'aide d'algorithmes de reconnaissance faciale sur l'image acquise au niveau du kiosque (100) et l'image de l'identification du revendeur.

6. Système selon l'une quelconque des revendications précédentes, dans lequel le serveur (75) est conçu pour utiliser le logiciel de reconnaissance faciale afin d'identifier le revendeur en fonction de l'image acquise au niveau du kiosque (100) et de l'image de l'identification du revendeur, et le serveur (75) est conçu pour comparer les deux images.

7. Système selon l'une quelconque des revendications précédentes, conçu en outre pour stocker les données de transfert dans une base de données.

8. Système selon l'une quelconque des revendications 2 à 7, dans lequel le kiosque (100) comprend en outre :
un boîtier ; et
une interface utilisateur sur une surface extérieure du boîtier permettant à l'utilisateur de saisir des informations ;
dans lequel le processeur (160) est en communication avec le composant d'imagerie (91), le connecteur électrique (505) et l'interface utilisateur, et le processeur (160) est configuré pour :
identifier une marque et un numéro de modèle du dispositif électronique (150) en fonction d'au moins l'un de : les informations provenant de l'utilisateur ou les images provenant du composant d'imagerie (91),
effectuer une analyse visuelle de l'afficheur du dispositif électronique (150),
effectuer une analyse électrique du dispositif électronique (150), déterminer une valeur de rémunération financière pour le dispositif électronique (150) et
gérer un transfert de données à partir du dispositif électronique (150).

9. Procédé de revente de dispositifs électroniques comprenant :
la réception d'un appareil électronique (150) destiné à être revendu au niveau d'un kiosque (100) ;
l'obtention d'une première image d'un revendeur en temps réel à l'aide d'un composant d'imagerie extérieur (91) du kiosque (100),
la réception d'une identification du revendeur au niveau du kiosque (100) à partir d'un lecteur d'identification (93) et la dérivation d'une seconde image du revendeur à partir de l'identification du revendeur,
la réception d'une identification du dispositif électronique (150) au niveau du kiosque (100), et
le recueil comme données de transfert : de la première image du revendeur, des informations d'identification du revendeur, y compris la seconde image du revendeur, et de l'identification du dispositif électronique (150),
la transmission des données de transfert à un serveur à distance (75) par l'intermédiaire d'un réseau en temps réel ;
et en temps réel :
l'affichage de la première image du revendeur et des informations d'identification comprenant la seconde image du revendeur sur un afficheur à distance, afin qu'un opérateur à distance approuve ou rejette chaque transaction au niveau du kiosque (100).

10. Procédé selon la revendication 9, comprenant en outre l'interaction du revendeur avec l'opérateur à distance.

11. Procédé selon la revendication 9 ou 10, comprenant en outre :
la connexion d'un connecteur électrique (505) au dispositif électronique (150) au sein de la zone d'inspection (106) ; et
l'envoi de données provenant d'une analyse électrique du dispositif électronique (150) à l'opérateur à distance.

12. Procédé selon l'une quelconque des revendications 9, 10 ou 11, comprenant en outre :
l'envoi de données provenant du composant d'imagerie (610) au sein de la zone d'inspection (106) à l'opérateur à distance, pour que l'opérateur à distance puisse inspecter visuellement le dispositif électronique (150).

13. Procédé selon l'une quelconque des revendications 9 à 12, comprenant en outre :
la vérification, par le kiosque (100), de l'identité du revendeur à l'aide d'algorithmes de reconnaissance faciale sur l'image du revendeur acquise au niveau du kiosque (100) et l'image de l'identification du revendeur ; ou
l'utilisation, par le serveur (75), d'un logiciel de reconnaissance faciale pour identifier le revendeur en fonction de l'image acquise au niveau du kiosque (100) et de l'image de l'identification du revendeur, et la comparaison, par le serveur (75), des deux images.

14. Procédé selon l'une quelconque des revendications 9 à 13, comprenant en outre :
un processeur (160) dans le kiosque (100) qui :
identifie la marque et le numéro de modèle du dispositif électronique (150) en fonction d'au moins l'un de : les informations provenant de l'utilisateur ou les images provenant du composant d'imagerie (91),
effectue une analyse visuelle de l'afficheur du dispositif électronique (150),
effectue une analyse électrique du dispositif électronique (150), détermine une valeur de rémunération financière pour le dispositif électronique (150) ; et
gère un transfert de données à partir du dispositif électronique (150).

15. Système ou procédé selon l'une quelconque des revendications précédentes, dans lequel :
le dispositif électronique (150) est un téléphone mobile ; et/ou
l'identification du dispositif électronique (150) est un IMEI, un MEID ou un numéro de série ; et/ou
l'identification du dispositif électronique (150) est comparée à une base de données de dispositifs électroniques volés en tant que filtre avant l'achat du dispositif électronique (150) auprès du revendeur.
